# EUROPEAN PATENT SPECIFICATION

(11) **EP 0 536 709 B1**
(45) Date of publication and mention of the grant of the patent: **24.07.1996**
(21) Application number: 92117091.6
(22) Date of filing: 07.10.1992
(51) Int. Cl.: B65G 23/06

(54) **Drive sprocket systems for registration of spaced metal laminations across the width of plastic conveyor belts**
Zahnrad-Antriebssystem zur Einpassung von beabstandeten Metallamellen über die Breite eines Plastik-Förderbandes
Système d'entraînement à roues dentées pour l'ajustement de lamelles métalliques espacées sur la largeur de bandes de transport en plastique

(30) Priority: 10.10.1991 US 774353
(43) Date of publication of application: 14.04.1993
(73) Proprietor: The Laitram Corporation, Harahan Louisiana 70123 (US)
(72) Inventor: Ledet, Brent A., Metairie, Louisiana 70002 (US)
(74) Representative: Troesch Scheidegger Werner AG

(56) References cited:
- DE-C- 694 515
- US-A- 4 865 183
- US-E- 30 341

## Description

### TECHNICAL FIELD:

This invention relates to laminated metal sprockets for driving plastic conveyor belts and more particularly it relates to registration of spaced metal laminations with a set of plastic belt drive surfaces disposed across the width of the belt.

### BACKGROUND:

Laminated metal sprockets positioned on rotatable drive shafts for driving plastic modular belts are introduced in the related U. S. patents 5,074,406, Dec. 24, 1991 and 5,156,263, Oct. 20, 1992.

Operational experience with metal sprocket driving systems for plastic modular belts has indicated various unsolved problems pertinent to belt system operating life and reliability under dynamic operating conditions frequently encountered.

Because of the relatively flexible character of plastic modular conveyor belts, the belts tend to sag, expand and contract with temperature, and vary in response to aging and loading, as contrasted with the relative stability and firmness of metal sprockets located on metal drive shafts. For example, lateral movement of the belt during operation can cause frictional loading and corresponding undesirable interference and wear because of mismatches in registration of metal sprockets with corresponding belt drive surfaces. The probability that changes of dimension is non-uniform across the belt width gives further problems of producing reliable belt drive systems operable under changing and variable dynamic conditions. Thus, individual sprocket drive lamina generally behave differently across the width of the belt in the presence of curvature in belt drive systems, loading imbalances across the belt, and the influence of railings at the belt edges.

The softer plastic modules are subject to wear from the harder metal drive sprockets. To reduce wear induced from belt stops and starts, it is important to keep the weight and inertia of metal drive sprockets low particularly when encountering variable speed or stop and go operating conditions. Thus, operating life is extended by employment of light weight sprocket systems.

Conveyor belts come in many variations, depending upon loading, speeds, widths, adaption for curvature of conveyor paths, and the like. These factors not only affect the variations of belt dimensions and the wear as aforesaid, particularly where heavy drive forces are required for high belt loads, but also demand significant differences in drive sprocket configurations. Thus, heavier loaded belts in general require more sprocket laminations dispersed across the width of a belt, and possibly different numbers of laminations in different drive positions across the belt width. Therefore a belt sprocket drive system needs to be modularized and flexible in configuration to avoid the necessity to design and inventory a variety of seldom used drive systems adapted to different ranges of belt functions.

US-E-RE. 30 341 exhibits a sprocket drive assembly with one sprocket fixedly mounted to the drive shaft and two further sprockets mounted freely movable on the shaft on opposite sides of said fixed sprocket. Although such construction may be suitable for partly solving the afore mentioned problem, it is limited to a system with a maximum of three sprockets and such sprockets are not allowed to be floatingly interspaced on the shaft, i.e. an axial positioning of the set of sprockets along the drive shaft is not possible. Furthermore, as one sprocket has to be fixed on the shaft by clips or similar mechanical means in grooves of the shaft, this could weaken the shaft or necessitate a greater shaft cross-section.

Another problem is encountered in initial registration of a laminar type metal sprocket drive system with belt drive surfaces across a conveyor belt width. The lamina must be critically spaced axially along the drive shaft to register with drive surface apertures dispersed over the width of the conveyor belt. Once registered, the sprocket lamina may be maintained laterally in registration by the mating belt drive surface structure when the sprocket lamina are freely axially movably positioned to float on the drive shaft. However, the inital manual assembly of a drive system is awkward and tedious, particularly with wide belts having several lamina critically spaced over the belt width in ganged relationship.

It is therefore an objective of this invention to provide a plastic modular conveyor belt drive system having a set of at least two rotatable sprocket drive elements movably disposed axially along a sprocket drive shaft to laterally adjust to dynamic lateral movement of drive surfaces in a plastic modular conveyor belt driven by sprocket drive elements, resolving the foregoing problems. The solution in accordance with the present invention comprises the characteristic features defined in claim 1.

The invention further consists in a method for movably disposing a set of at least two sprocket drive elements comprising the characteristic features as defined in claim 6.

### DISCLOSURE OF THE INVENTION

The belt drive sprocket provided by this invention has a plurality of metal sprocket lamina of predetermined thickness formed from a disc like member with a non-circular, for example square, drive aperture. The lamina are coaxially positioned about the axis of rotation of the sprocket in an axially spaced set. Peripherally oriented driving sprocket tooth surfaces are spaced at selected angular positions around the axis of rotation to form a set of metallic driving surfaces on each lamination. The laminations are formed from metal plates or sheet metal, preferably by laser cutting or stamping.

Each drive lamination preferably has cut thereinto an angularly positioned set of cut out apertures thereby forming a skeleton framework serving to reduce the weight and inertia of the system to better react to dynamic operating conditions thus reducing wear and friction under stop and go cycles, for example.

The sprocket lamina are useful in various embodiments and configurations formed across the width of modular plastic belts to provide mating drive surfaces, either as spaced single drive lamina or in rigid ganged groupings. Spacer lamina or the like are used between sprocket drive lamina for producing rigid groupings. The stacked and aligned lamina of rigid groups may be registered laterally across the width of a belt in various ways, such as by interspersed light weight laminar axial spacing plates interlocked in place with adjacent sprocket lamina.

The improved flexible drive system of this invention is adaptable to a wide variety of belt conditions. It has a belt with a set of drive surfaces disposed across its width for mating engagement with a corresponding set of metal drive sprocket lamina disposed axially on a rotary drive shaft. The drive lamina are axially spaced for displacement along the drive shaft for mating registration into the belt drive surfaces by ganging means that retains a relative spacing between sprocket lamina, but permits lamina both singly and in unison to float along the shaft axis for dynamically following variations in belt characteristics occurring during dynamic operation.

Accordingly an improved, long life metal sprocket driven modularized conveyor belt system is achieved with the improved versatile drive system afforded by this invention.

### BRIEF DESCRIPTION OF THE DRAWINGS:

In the drawings like reference characters designate similar features throughout the several views to facilitate comparison.
Fig. 1 is a perspective fragmental view of a plastic modular conveyor belt engaged by a laminated sprocket drive assembly positioned on a square driving shaft;
Fig. 2 is a perspective exploded view showing a set of drive surfaces in the plastic belt modules for mating with laminar sprocket teeth in predetermined positions across the belt width;
Fig. 3 is a perspective view of a sprocket drive embodiment with two laminar sprocket elements ganged by appropriate spacers;
Fig. 4 is a perspective view of a removable spacer for positioning on a square shaft between adjacent laminar drive elements;
Fig. 5 is a plan view of a further sprocket lamination element embodiment;
Fig. 6 is a side view of a lamination type spacer bracket for holding sprocket elements in relative spaced positions across the width of the belt;
Fig. 7 is a perspective sketch of a partially assembled sprocket drive being readied for mounting on the drive shaft;
Fig. 8 is a side view sketch, partly in phantom, showing a sprocket system that dynamically floats on the drive shaft to adjust to variations of belt dimensions during operation;
Fig. 9 is a plan view of a further lamination type spacer bracket for holding sprocket elements in relative spaced positions across the width of the belt; and
Fig. 10 is a plan view of a sprocket drive lamination into which the spacer bracket of Fig. 9 interlocks.

### THE PREFERRED EMBODIMENTS:

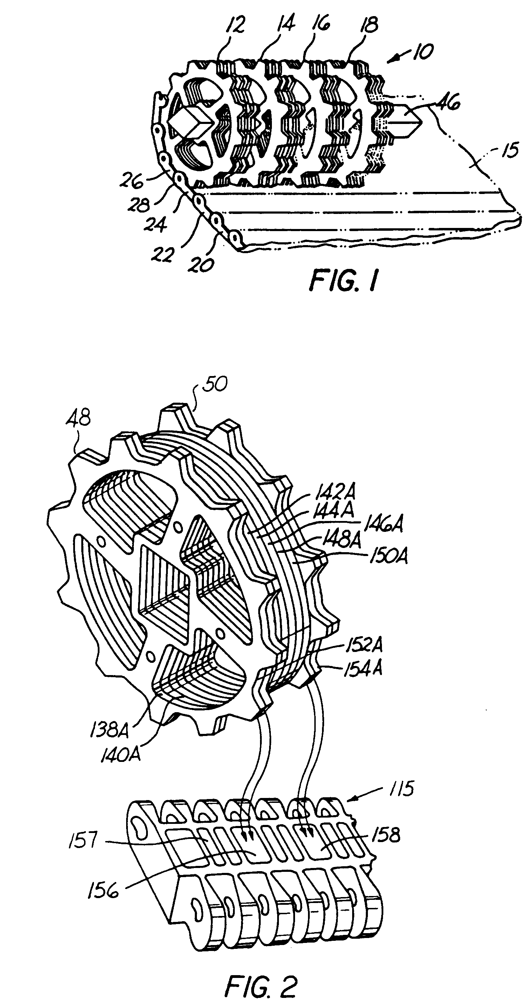

In Fig. 1 the belt drive system sprocket assembly 10 is mounted on square rotary shaft 46 for driving the modular plastic conveyor belt 15 by mating engagement of laminar sprocket tooth assemblies 12, 14, 16, and 18 with corresponding drive surfaces on the belt modules 20, 22, 24, and 26 each pivoted about a pivot rod 28 in the conveyor belt assembly. The sprocket is formed of laminar metal sprocket elements, which may be grouped and spaced along the axis of the drive shaft 46 in various configurations to meet a wide variety of belt configurations.

As previously set forth, and as better illustrated in the configuration of Fig. 2, there is a critical driving relationship between the sprocket teeth and the plastic belt modules which encourages wear by variations of belt dimensions and by dynamic drive conditions causing lateral displacement of belt drive surfaces. Other significant wear occurs when the metal sprocket laminar assembly is heavy and subject to high inertia when belts are stopped and started routinely or under emergency conditions. Thus, the sprocket system laminations are of a "skeleton" type construction for lighter weight and longer belt wear.

Also the substantially fixed spacing between the sprocket tooth subassemblies 48, 50 which must register with apertured belt drive surfaces 156, 158, bare illustrated, can cause friction and wear because the plastic module 115 does not expand and contract identically with the metal sprocket drive assembly, and other lateral belt movements. Modular interaction found in various types of modular construction can cause the drive surfaces to dynamically change under loading, curvature paths and the like. This illustrated embodiment exemplifies the versatility of sprocket drive systems formed with the laminar elements as shown, which can be assembled to conform to different belt drive surface configurations across the width of a belt and to belts of different loading and dynamic characteristics.

In this particular Fig. 2 configuration, two staged drive lamina 138A and 140A are followed by five spacer lamina 142A, 144A, 146A, 148A and 150A, which in turn are followed by two more drive tooth lamina 152A and 154A. Thus, the drive sub-assemblies 48 and 50 will mate into the wider belt drive surfaces 156 and 158 in the module 115. For driving lighter belt loads, for example, single lamina could mate into narrow drive surfaces 157. It is clear therefore that a modular system of laminar drive sprocket construction as shown will provide great versatility for use in belts of different construction and furthermore as later made more clear, will additionally provide more reliable drive and belt systems under dynamic operating conditions.

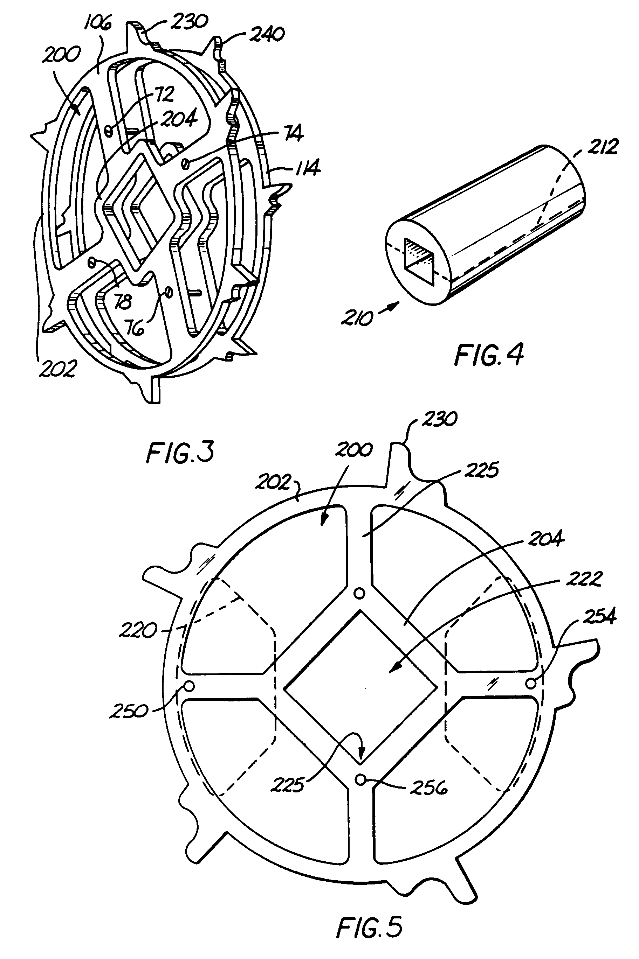

Fig. 3 illustrates the light weight low-inertia assembly construction possibilities using the metal laminar sprocket drive elements 106 and 114. Spacer means for this simplified and representative embodiment are the light weight screws 72, 74, 76, 78 which hold the two elements 106 and 114 a fixed distance apart.

The primary reason for spacers between the drive lamina 106, 114, etc. is to locate them axially along the drive shaft for registration with belt driving surfaces disposed across the belt width. In some belt drive systems it is desirable to let some of the individual lamina float axially on the drive shaft to allow for belt expansion and contraction, loading unbalances, and over types of distortion incurred under dynamic conditions such as curvature of the belt path, and influence of edge railings, etc., which may cause the belt to tend to shift or wander laterally.

The temporary spacer embodiment 210 of Fig. 4 shows two halves of a generally cylindrical shaft overlay assembly, with the two halves identified at line 212. Accordingly, during assembly of the belt with the sprocket system, the spacer 210 can be temporarily installed on the square shaft to gauge the desired predetermined spacing between adjacent sprocket lamination elements at opposite ends for assuring mating registration in corresponding belt drive surfaces. The belt after proper mating then maintains the sprocket laminations in place during belt movement. The laminations may float on the square shaft to conform with the dynamic lateral distortions of the belt after the temporary spacer 210 is removed and the belt is driven. This temporary type of spacer is suitable for use when the sprocket system does not require a more rigid stacked and ganged laminar assembly, and where floatation of the sprocket laminations on the shaft is desirable to conform with dynamic conditions of belt operation.

In the Fig. 5 embodiment, cut-out apertures 200, preferably cut by means of a laser cutting tool, provides blanks 220. These blanks 220, when used as spacers between drive laminations 202, advantageously reduce the weight and inertia of the metal sprocket drive system, and eliminates the expense of forming the more complex spacer lamina of the Fig. 2 embodiment, for example. These blanks 220 may be welded or otherwise affixed in place on opposite sides of the drive shaft and sprocket lamination, such as shown in dotted line format.

In this embodiment, the rim 204 about the substantially square drive apertures 222 is coupled to the circumferential rim 202 by means of radial coupling links 225 extending from the four apices 228 of the square. This produces cut-out apertures 200 and corresponding blanks 220 of substantially trapezoidal shape. Also this drive lamination configuration 202 provides the advantage of offsetting the drive tooth surfaces 230, 240 of adjacent drive lamina with a single lamination configuration. This is achieved by simply reversing the lamina to register at the bolt apertures 250, 252, 254, 256.

The described drive system has contributed improved operating of a plastic modular conveyor belt system having a plurality of belt drive surfaces disposed across a predetermined width of the belt by employing metal drive sprocket lamina. Thus, metal sprocket drive lamina of predetermined thickness are produced from metal discs by removing a set of apertures of predetermined shape from the discs to form a lighter weight skeleton embodiment of the sprocket elements. A plurality of such metal drive lamina defining a non-circular drive aperture about an axis of rotation and presenting a plurality of driving surfaces radially disposed about the laminations are disposed across the width of the belt while the laminations are retained in a spaced relationship to register the metal sprocket driving tooth surfaces into corresponding plastic belt drive surfaces in an improved long life relationship.

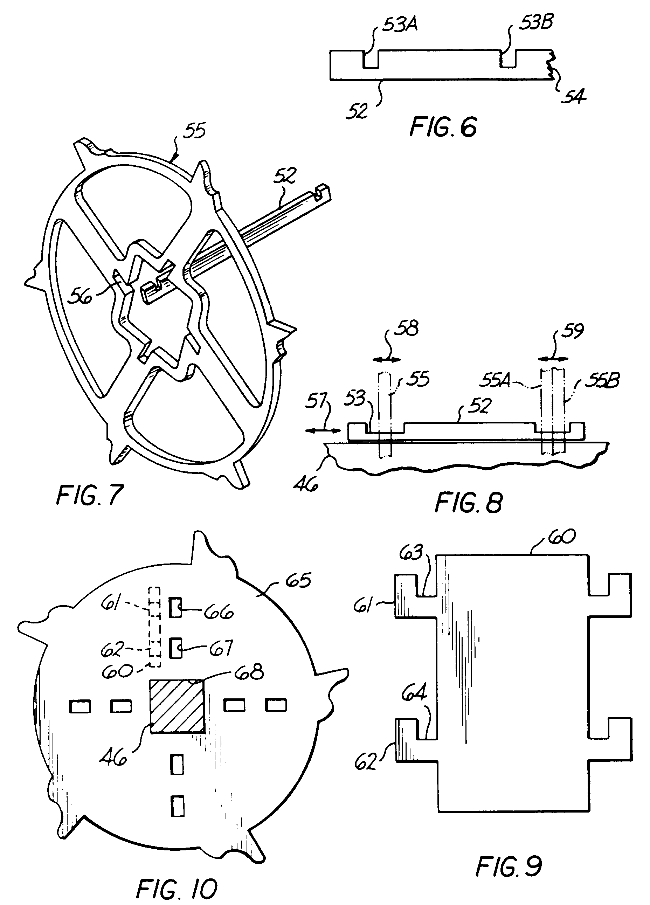

The ganging spacer 52 of Fig. 6 comprises a light weight lamination for installation adjacent the drive shaft 46 to extend axially therealong and position sprocket drive lamina in slots 53A and 53B, etc. This ganging spacer element 52 is readily conformed to different belt drive sprocket needs and serves to locate a plurality of drive sprocket elements 55 across the width of a belt to register with the corresponding belt drive surface configuration, and thus is indicated at 54 to be extensible for mounting different combinations of axially disposed drive sprocket laminar elements, such as 55.

The notches 53 provide interlocking structure with the slots 56 positioned adjacent the four planes of the square drive shaft in the laminar drive element 55. It is seen therefore that the ganging spacer 52 has its slot manually, or with an appropriate jig, positioned for interlocking into a sprocket slot 56 before placing on the drive shaft. The drive shaft then locks the ganging spacer 52 irremovably in place until the sprocket drive assembly is removed from the shaft. Thus the array of sprocket drive elements 55 are held in appropriate axial spacings along the driveshaft for mating with the corresponding belt drive surfaces. Typically there are four spacers 52 disposed on the four planar surfaces of a square shaft, but other shaft configurations and arrangements of the laminar spacers and interlocking structure can be adopted for similar functioning.

The functional relationship of this ganged spacer unit is illustrated in Fig. 8, wherein the spacer 52 is shown by arrow 57 to be axially movable in a floating relationship on one surface of the shaft 46. Thus, the gang of drive sprockets 55 will as a unit dynamically conform to any lateral shifting of the belt encountered in operation, such as might tend to occur with unbalanced loads, etc.

Furthermore note that the spacer member 52 has slots 53 wider than the sprocket drive element 55, and can accommodate a group of side by side laminar elements 55A, 55B, so that the drive sprocket sections can individually or in groupings float for axial adjustment during dynamic belt operation as indicated by arrows 58, 59. Thus, it is seen that with uneven expansion or contraction of the belt width in response to temperature or load, the sprocket drive system will dynamically adapt for an optimum mating engagement of the metal sprocket elements 55 and the corresponding plastic belt drive surfaces. This avoids friction and wear on the belt.

As seen from Figures 9 and 10, the ganging spacer plate lamination 60 of different format has two radially disposed interlocking brackets 61, 62 with alongside notches 63, 64 that will interlock into corresponding apertures 66, 67 in a drive sprocket lamination 65 of large diameter. As shown in phantom in Fig. 10, the spacer 60 with interlocked brackets 61, 62 in the apertures 66, 67 will ride upon the surface 68 of drive shaft 46 in the assembled drive system. Thus, the dynamic functioning is similar to that illustrated in Fig. 8.

## Claims

1. Conveyor belt drive system for a plastic modular conveyor belt, the drive system having a set of at least two rotatable metal sprocket drive elements (55) movably disposed axially along a sprocket drive shaft (46) to laterally adjust to dynamic lateral movement of drive surfaces in a plastic modular conveyor belt (15) driven by the sprocket drive elements (55), characterized by:
drive element spacing means (52, 60) freely movable in a path axially along and parallel to the sprocket drive shaft (46) for axially positioning the set of drive elements (55) along the shaft, and
structure (53; 63, 64) on said spacing means (52, 60) for disposing the sprocket drive elements (55) along the spacing means (52, 60) with a predetermined axial spacing relationship which permits at least one of the drive elements (55) to axially move relative to another one of the drive elements (55).

2. The conveyor belt drive system of claim 1 further characterized by:
said spacing means (52, 60) comprising a light weight lamination of substantially rectangular configuration defining along the shaft (46) axis a set of slots (53A, 53B; 63, 64) for axially retaining respective drive elements (55, 65) and confining them in said predetermined axial spacing relationship.

3. The conveyor belt drive system of claim 2 further characterized by:
said sprocket drive elements (55) comprising thin metallic laminations having a slot (56) extending radially away from the drive shaft (46) of such dimensions to form an interlocking joint with one of the slots (53A, 53B) along the spacing means (52).

4. The conveyor belt drive system of claim 1 further characterized by:
the spacing means (52) being structured to removably retain the set of drive elements (55) on the drive shaft (46) by an interlocking joint structure (53, 56) between the spacing means and the drive elements.

5. The conveyor belt drive system of claim 1 further characterized by:
said drive elements (55) comprising metal drive sprocket laminations, and said spacing means (60) further comprising ganging structure (61, 62, 63, 64) disposed at different distances away from the drive shaft (46) for holding at least two of said drive elements (55) in axially spaced displacement.

6. A method of movably disposing a set of at least two rotatable metal sprocket drive elements (55) in a plastic modular conveyor belt drive system in an axially movable configuration along a sprocket drive shaft (46) to laterally adjust to dynamic lateral movement of drive surfaces of a plastic modular conveyor belt (15) driven by the sprocket drive elements (55), characterized by:
spacing apart at a predetermined spacing in a drive element spacing structure (52) at least two drive elements (55) retained in the predetermined axial spacing for jointly moving in an axially movable configuration for floating on the drive shaft (46),
retaining at least one of the drive elements (55) in the spacing means (52) along the sprocket drive shaft (46) with a limited degree of freedom of axial movement relative to the shaft (46) thereby to conform with dynamic variations of mating drive positions occurring laterally to the belt (15) when driven by the drive elements (55).

## Patentansprüche

1. Bandantriebssystem für ein aus Kunststoffgliedern gebildetes Förderband, mit einem Satz aus wenigstens zwei drehbar gelagerten gezahnten Antriebselementen (55) aus Metall, welche auf einer Antriebswelle (46) axialverschiebbar angeordnet sind, um während dem Betrieb seitlichen Bewegungen von durch die gezahnten Antriebselemente (55) angetriebenen Antriebsflächen im Gliederband (15) zu folgen, gekennzeichnet durch:
- Abstandsmittel (52, 60) für die Antriebselemente, welche axial und parallel entlang der Antriebswelle (46) frei verschiebbar sind, um den Antriebselementsatz (55) axial entlang der Welle zu positionieren, und
- strukturelle Ausbildungen (53; 63, 64) an den Abstandsmitteln (52, 60), um die gezahnten Antriebselemente (55) entlang den Abstandsmitteln (52, 60) mit vorbestimmten gegenseitigen axialen Abständen derart anzubringen, dass zumindest eines der Antriebselemente (55) relativ zu einem anderen der Antriebselemente (55) axial verschiebbar ist.

2. Bandantriebssystem nach Anspruch 1, dadurch gekennzeichnet, dass die Abstandsmittel (52, 60) aus leichtgewichtigen Lamellen von im wesentlichen rechteckiger Konfiguration gebildet sind, welche entlang der Achse der Welle (46) eine Anzahl Schlitze (53A, 53B; 63, 64) bilden, uni die entsprechenden Antriebselemente (55, 65) axial zurückzuhalten und letztere im genannten gegenseitigen axialen Abstand einzuschliessen.

3. Bandantriebssystem nach Anspruch 2, dadurch gekennzeichnet, dass die gezahnten Antriebselemente (55) aus dünnen metallischen Scheiben mit einem sich radial von der Antriebswelle (46) weg erstreckendem Schlitz (56) gebildet sind, welcher Schlitz so dimensioniert ist, dass er eine Verriegelung mit einem der Schlitze (53A, 53B) entlang der Abstandsmittel (52) bildet.

4. Bandantriebssystem nach Anspruch 1, dadurch gekennzeichnet, dass die Abstandsmittel (52) derart ausgebildet sind, um mittels einer Verriegelungsstruktur (53, 56) zwischen den Abstandsmitteln und den Antriebselementen den Antriebselementsatz (55) abnehmbar auf der Antriebswelle (46) festzuhalten.

5. Bandantriebssystem nach Anspruch 1, dadurch gekennzeichnet, dass die Antriebselemente (55) gezahnte Metallscheiben umfassen, und dass die Abstandsmittel (60) Koppelungsmittel (61, 62, 63, 64) aufweisen, welche in unterschiedlichen Abständen von der Antriebswelle (46) angeordnet sind, um wenigstens zwei der Antriebselemente (55) in axialem Abstand voneinander zu halten.

6. Verfahren zum verschiebbaren Anordnen eines Satzes von wenigstens zwei drehbar gelagerten gezahnten Antriebselementen (55) aus Metall in einem Bandantriebssystem eines aus Kunststoffgliedern gebildeten Förderbandes, dies axial verschiebbar entlang einer Antriebswelle (46) für die gezahnten Antriebslemente, um dynamisch seitlichen Bewegungen von durch die Antriebselemente (55) angetriebenen Antriebsflächen im Gliederband (15) durch seitliches Ausweichen zu folgen, gekennzeichnet durch:
- die Anordnung in einem vorbestimmten Abstand in einem Abstandmechanismus (52) von wenigstens zwei Antriebselementen (55), welche im vorbestimmten axialen Abstand gehalten sind, um gemeinsam in axialer Richtung auf der Antriebswelle (46) zu schwimmen und
- durch Zurückhalten von wenigstens einem der Antriebselemente (55) im Abstandmechanismus (52) entlang der Antriebswelle (46) mit eingeschränktem Freiheitsgrad für eine axiale Bewegung relativ zur Welle (46), um sich so dynamischen Variationen von entsprechenden Antriebsstellungen quer zum Band (15) bei dessen Antrieb durch die Antriebselemente (55) anzupassen.

## Revendications

1. Système d'entraînement de bande pour bandes de transport modulaires en plastique avec un jeu d'au moins deux éléments d'entraînement dentés rotatifs en métal (55) disposés de manière déplaçable axialement le long d'un arbre d'entraînement (46) pour s'ajuster latéralement à un mouvement latéral dynamique de surfaces d'entraînement dans la bande de transport modulaire en plastique (15) entraînée par les éléments d'entraînement (55), caractérisé par:
- des moyens d'écartement (52, 60) pour les éléments d'entraînement librement mobiles axialement et parallèlement le long de l'arbre d'entraînement (46) pour axialement positionner ledit jeu d'éléments d'entraînement le long de l'arbre, et
- une structure (53; 63, 64) sur lesdits moyens d'écartement (52, 60) pour disposer les éléments d'entraînement dentés (55) le long des moyens d'écartement (52, 60) avec un écartement mutuel axial prédéterminé permettant à au moins un des éléments d'entraînement (55) de se déplacer axialement par rapport à un autre desdits éléments d'entraînement (55).

2. Système d'entraînement de bande selon la revendication 1, caractérisé en ce que les moyens d'écartement (52, 60) comprennent des lamelles de poids léger à configuration essentiellement rectangulaire définissant le long de l'axe de l'arbre (46) une série de fentes (53A, 53B; 63, 64) pour axialement retenir les éléments d'entraînement correspondants (55, 65) et les enfermant avec ledit écartement axial prédéterminé.

3. Système d'entraînement de bande selon la revendication 2, caractérisé en ce que lesdits éléments d'entraînement dentés (55) comprennent les lamelles métalliques minces ayant une fente (56) s'étendant radialement vers l'extérieur à partir de l'arbre d'entraînement (46) et dimensionnées pour former un joint de verrouillage avec une des fentes (53A, 53B) le long des moyens d'écartement (52).

4. Système d'entraînement de bande selon la revendication 1, caractérisé en ce que les moyens d'écartement (52) sont formés pour amoviblement retenir le jeu d'éléments d'entraînement (55) sur l'arbre (46) au moyen d'une structure de verrouillage (53, 56) entre les éléments d'écartement et les éléments d'entraînement.

5. Système d'entraînement de bande selon la revendication 1, caractérisé en ce que les éléments d'entraînement (55) comprennent des lamelles dentées d'entraînement en métal et en ce que les éléments d'écartement (60) comprennent une structure d'accouplement (61, 62, 63, 64) disposée à des distances différentes de l'arbre d'entraînement (46) pour retenir au moins deux des éléments d'entraînement (55) axialement espacés.

6. Procédé pour disposer un jeu d'au moins deux éléments d'entraînement dentés rotatifs en métal (55) dans un système d'entraînement de bandes de transport modulaires en plastique de manière à pouvoir être déplacés axialement le long d'un arbre d'entraînement (46) pour s'ajuster latéralement à un mouvement latéral dynamique de surfaces d'entraînement d'une bande de transport modulaire en plastique (15) entraînée par les éléments d'entraînement dentés, caractérisé par le fait que l'on
- place à une distance prédéterminée l'un de l'autre dans une structure d'écartement (52) au moins deux éléments d'entraînement (55) retenus à ladite distance axiale prédéterminée pour se déplacer ensemble selon un mouvement axial pour ainsi flotter sur l'arbre d'entraînement, et que l'on
- retient au moins un des éléments d'entraînement (55) dans ladite structure (52) le long de l'arbre d'entraînement (46) avec un degré de liberté limité pour permettre un mouvement axial par rapport à l'arbre (46), pour ainsi s'adapter à des variations dynamiques de positions d'entraînement correspondantes latérales par rapport à la bande (15) lorsqu'elle est entraînée par les éléments d'entraînement (55).
